(19) Europäisches Patentamt
European Patent Office
Office européen des brevets

(11) EP 4 486 822 B1

(12) # EUROPEAN PATENT SPECIFICATION

(45) Date of publication and mention of the grant of the patent:
**26.11.2025 Bulletin 2025/48**

(21) Application number: **23707905.8**

(22) Date of filing: **23.02.2023**

(51) International Patent Classification (IPC):
***C08J 5/22*** *(2006.01)* ***B01D 53/22*** *(2006.01)*
***B01D 69/02*** *(2006.01)* ***B01D 71/68*** *(2006.01)*
***B01D 71/72*** *(2006.01)* ***B01D 71/82*** *(2006.01)*

(52) Cooperative Patent Classification (CPC):
**B01D 69/02; C08J 5/2256;** B01D 53/228; B01D 53/326; B01D 61/422; B01D 2325/10; B01D 2325/14; C08J 2381/06; Y02E 60/50

(86) International application number:
**PCT/EP2023/054579**

(87) International publication number:
**WO 2023/161356 (31.08.2023 Gazette 2023/35)**

(54) **PROCESS FOR THE PREPARATION OF A MEMBRANE (M) CONTAINING A SULFONATED POLYARYLENESULFONE POLYMER (SP)**

VERFAHREN ZUR HERSTELLUNG EINER MEMBRAN (M), DIE EIN SULFONIERTES POLY(ARYLENSULFON-POLYMER (SP) ENTHÄLT

PROCÉDÉ DE PRÉPARATION D'UNE MEMBRANE (M) CONTENANT UN POLYMÈRE DE POLYARYLÈNESULFONE SULFONÉ (SP)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.02.2022 EP 22159246**

(43) Date of publication of application:
**08.01.2025 Bulletin 2025/02**

(73) Proprietor: **BASF SE**
**67056 Ludwigshafen am Rhein (DE)**

(72) Inventors:
- **WEBER, Martin**
  **67056 Ludwigshafen (DE)**
- **MALKO, Daniel**
  **30173 Hannover (DE)**
- **SCHMIDT-HANSBERG, Benjamin**
  **67056 Ludwigshafen (DE)**
- **HENSCHEL, Carsten**
  **30173 Hannover (DE)**
- **GRONWALD, Oliver**
  **67056 Ludwigshafen (DE)**
- **BELACK, Joerg**
  **30173 Hannover (DE)**

(74) Representative: **BASF IP Association**
**BASF SE**
**GBI - Z078**
**67056 Ludwigshafen (DE)**

(56) References cited:
**WO-A1-2017/148850**
**WO-A1-2019/016082**
**US-A1- 2017 005 353**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 486 822 B1

## Description

The present invention relates to a process for the preparation of a membrane (M) containing a sulfonated polyarylenesulfone polymer (sP), the membrane (M) obtained by the inventive process, a fuel cell, an electrodialysis cell and an electrolytic cell comprising the membrane (M), the use of the membrane (M) in an electrolytic cell, an electrodialysis cell or a fuel cell and a process for the preparation of electrical energy and/or hydrogen.

Politics, society and industry aim to reduce the $CO_2$-emissions by decarbonizing industry and mobility. In this context, green hydrogen plays a strategic role as it can substitute hydrocarbons for chemical and industrial processes, energy transformation and fuel cell propulsion in mobility applications. Renewable electrical power can be used to operate electrolysis cells to produce green, sustainable hydrogen.

A key component in electrolysis cells, electrodialysis cells and fuel cells are the so-called polymer electrolyte membranes (PEM), which have to fulfil several requirements. They need to be ion conductive and at the same time they have to separate the gases hydrogen and oxygen. In addition, membranes have to be robust and stable for a long operation and lifetime with constant performance.

The state-of-the-art membranes are mainly based on fluorinated polymers with sulfonic acid side chains (PFSA's), which are known e. g. under the trade name Nafion®. Due to the complexity of the PFSA production, these polymers are still quite expensive. Furthermore, the toxicity and persistency of fluorinated chemicals raise several challenges for the production, use and recycling of these materials. Thus, science and industry try to develop more sustainable solutions to replace PFSA membranes.

One promising class of materials for these applications are polyarylenesulfone polymers. They belong to the group of high performance polymers having high heat resistance, chemical resistance, excellent mechanical properties and durability (E.M. Koch, H.-M. Walter, Kunststoffe 80 (1990) 1146; E. Döring, Kunststoffe 80, (1990) 1149, N. Inchaurondo-Nehm, Kunststoffe 98, (2008) 190).

Besides the use as engineering plastics, polyarylenesulfone polymers are also used as membrane material for water treatment.

Polyarylenesulfone polymers can be formed *inter alia* either via the hydroxide method, wherein a salt is first formed from the dihydroxy component and the hydroxide, or via the carbonate method.

General information regarding the formation of polyarylenesulfone polymers by the hydroxide method is found *inter alia* in R.N. Johnson et. al., J. Polym. Sci. A-1 5 (1967) 2375, while the carbonate method is described in J.E. McGrath et. al., Polymer 25 (1984) 1827.

Methods of forming polyarylenesulfone polymers from aromatic bishalogen compounds and aromatic bisphenols or salts thereof in an aprotic solvent in the presence of one or more alkali metal or ammonium carbonates or bicarbonates are known to a person skilled in the art and are described in EP-A 297 363 and EP-A 135 130, for example.

High-performance thermoplastics such as polyarylenesulfone polymers are formed by polycondensation reactions which are typically carried out at a high reaction temperature in polar aprotic solvents, for example DMF (dimethylformamide), DMAc (dimethylacetamide), sulfolane, DMSO (dimethylsulfoxide) and NMP (N-methylpyrrolidone).

For the use as membrane materials in water electrolytsis cells, electrodialysis cells or fuel cells, the polymer has to show ion conductivity, which can be achieved by functionalization of polyarylenesulfone polymers with sulfonic acid groups.

Sulfonated polyarylenesulfone polymers are known since decades. While the direct sulfonation of polyarylenesulfone polymers is leading to side reactions and allows only limited control on the degree of sulfonation, the use of the di-sulfonated aromatic dihalogensulfones, like sulfonated dichlorodiphenylsulfone (sDCDPS) as co-monomer allows the synthesis of well-defined sulfonated polyarylenesulfone polymers.

WO 2017/148850 discloses a process to produce membranes (M) containing an organic polymer with intrinsic microporosity (PIM) and a sulphonated polyarylene sulphone polymer (sP). For this purpose, a solution (S) in which the two polymers are dissolved is provided in a first step (i). The sulphonated polyarylene sulphone polymer (sP) and the organic polymer with intrinsic microporosity (PIM) are preferably dissolved in a solvent to provide the solution (S). The sulphonated polyarylene sulphone polymers (sP) are isolated by precipitation in water and then dried. The same applies to the production of the polymer with intrinsic microporosity (PIM).

WO 2019/016082 discloses a process to produce sulfonated polyarylene ether sulfone polymers (sP) and a process for the production of membranes (M) from these polymers. It is disclosed that the sulfonated polyarylene ether sulfone polymer (sP) can be separated from the product mixture (PG) by precipitation in water or in water with other solvents. The isolation of the polymer is carried out by dropping an NMP solution of the polymer into demineralized water at room temperature. In the examples of membrane preparation, it is stated that 78 mL of NMP, 5 g of PVP and 17 g of the polymer are dissolved in a three-necked flask with a magnetic stirrer to prepare the membrane. The polymer is thus also separated by precipitation prior to membrane production.

Although sulfonated polyarylenesulfone polymers show several interesting properties for the use as ion conducting membranes in fuel cells or for electrolysis cells, however, there is still room for improvement of the sulfonated

polyarylenesulfone membranes described in the state of the art in view of proton conductivity, swelling and mechanical stability.

It is therefore an object of the present invention to provide a process for the preparation of a membrane (M) containing a sulfonated polyarylenesulfone polymer (sP) which does not retain the disadvantages of the prior art or only in diminished form. The process should be easy to carry out. The membrane (M) containing the sulfonated polyarylenesulfone polymer (sP) should be suitable for the use in electrolysis cells and fuel cells. Moreover, the membrane (M) should be suitable for the separation of hydrogen from hydrogen containing gas mixtures.

This object is achieved by a process for the preparation of a membrane (M) containing a sulfonated polyarylenesulfone polymer (sP) comprising the steps

i) converting a reaction mixture ($R_G$) comprising

an aromatic dihalogensulfone component (component (A)) comprising at least one sulfonated aromatic dihalogensulfone (component (A1)), and at least one non sulfonated aromatic dihalogensulfone (component (A2)),
at least one aromatic dihydroxy compound (component (B)),
at least on carbonate compound (component (C)), and
at least one aprotic polar solvent (component (D)),
to obtain a product mixture ($P_G$) comprising a sulfonated polyarylenesulfone polymer (sP), the at least one aprotic polar solvent and at least one inorganic halide compound,

ii) separating the at least one inorganic halide from the product mixture ($P_G$) to obtain a solution (S) comprising the sulfonated polyarylenesulfone polymer (sP) and the at least one aprotic polar solvent,

iii) separating the at least one aprotic polar solvent from the solution (S) to obtain the membrane (M) containing the sulfonated polyarylenesulfone polymer (sP),

wherein the sulfonated polyarylenesulfone polymer (sP) in the solution (S) in step ii) remains in dissolved form before step iii) is conducted.

It has surprisingly been found, that by the inventive process membranes (M) are obtained that show good proton conductivity, low swelling and high tensile elongation. By the inventive process the preparation time of membranes (M) containing sulfonated polyarylenesulfone polymers (sP) can be reduced significantly. The condensation according to step i) leads to polymer suspensions containing the sulfonated polyarylenesulfone polymer (sP) and inorganic halide salts. After separation of the salts, in the state of the art usually precipitation in isopropanol is done to isolate the sulfonated polyarylenesulfone polymers (sP), which causes huge volumes of solvent mixtures that have to be re-worked or disposed.

Furthermore, a part of the product is not completely precipitated and may lead to clogging of filters during subsequent separation. Moreover, for production of the membranes (M), the sulfonated copolymers have to be dissolved again. The invention process prevents the production of huge solvent mixtures and circumvents the separation prior to the preparation of membranes.

The present invention will be described in more detail hereinafter.

## Process

The inventive process for the preparation of the membrane (M) containing the sulfonated polyarylenesulfone polymer (sP) comprises the steps i), ii) and iii).

### *Step i)*

In step i) according to the invention a reaction mixture ($R_G$) is converted comprising an aromatic dihalogensulfone component, at least one aromatic dihydroxy compound, at least one carbonate compound, and at least one aprotic polar solvent in order to obtain a product mixture ($P_G$) comprising the sulfonated polyarylenesulfone polymer (sP), the at least one aprotic polar solvent and at least one inorganic halide compound.

The aromatic dihalogensulfone component is also referred to as component (A). The terms aromatic dihalogensulfone component and component (A) in the present invention are used synonymously and therefore have the same meaning.

The at least one aromatic dihydroxy compound is also referred to as component (B). The terms at least one aromatic dihydroxy compound and component (B) in the present invention are used synonymously and therefore have the same meaning.

The at least one carbonate compound is also referred to as component (C). The terms at least one carbonate

compound and component (C) in the present invention are used synonymously and therefore have the same meaning.

The at least one aprotic polar solvent is also referred to as component (D). The terms at least one aprotic polar solvent and component (D) in the present invention are used synonymously and therefore have the same meaning.

The reaction mixture ($R_G$) is the mixture which is provided in step i) for forming the sulfonated polyarylenesulfone polymer (sP) comprised in the product mixture ($P_G$). All components herein in relation to the reaction mixture ($R_G$) thus relate to the mixture which is present before the conversion, i.e. the polycondensation, according to step i).

The polycondensation takes place to convert reaction mixture ($R_G$) into the production mixture ($P_G$) comprising the sulfonated polyarylenesulfone polymer (sP), by polycondensation of components (A), and (B).

In step i) components (A) and (B) enter the polycondensation reaction. Component (C) acts as a base to deprotonate the hydroxyl groups of component (B). Component (D) acts as a solvent.

The product mixture ($P_G$) obtained after the polycondensation according to step i) comprises the sulfonated polyarylenesulfone polymer (sP). The product mixture ($P_G$) furthermore comprises the at least one inorganic halide compound and the at least one aprotic polar solvent (component (D)). The at least one inorganic halide compound is formed during the conversion of the reaction mixture ($R_G$). During the conversion, component (C) reacts with component (B) to deprotonate component (B). Deprotonated component (B) then reacts with component (A), wherein the at least one inorganic halide compound is formed. This process is known to the person skilled in the art.

The components of the reaction mixture ($R_G$) are preferably reacted concurrently. The individual components may be mixed in an upstream step and subsequently be reacted. It is also possible to feed the individual components into a reactor in which these are mixed and then reacted.

In step i) of the inventive process, the individual components of the reaction mixture ($R_G$) are preferably reacted concurrently. This reaction is preferably conducted in one stage. This means, that the deprotonation of component (B) and also the condensation reaction between components (A) and (B) preferably take place in a single reaction stage without isolation of the intermediate products, for example the deprotonated species of component (B).

It is furthermore preferred that the reaction mixture ($R_G$) provided in step i) does not comprise toluene or monochlorobenzene. It is particularly preferred that the reaction mixture ($R_G$) does not comprise any substance which forms an azeotrope with water. The same preferably applies to the product mixture ($P_G$).

The ratio of component (A) and component (B) in step i) derives in principle from the stoichiometry of the polycondensation reaction which proceeds with theoretical elimination of hydrogen halide, preferably hydrogen chloride, and is established by the person skilled in the art in a known manner.

Preferably, in step i) the ratio of halogen end groups derived from component (A) to phenolic end groups derived from component (B) is adjusted by controlled establishment of an excess of component (A) in relation to component (B) as starting compound.

More preferably, in step i) the molar ratio of component (A) to component (B) is from 0.95 to 1.08, especially from 0.98 to 1.06, most preferably from 0.985 to 1.05.

Preferably, the conversion in the polycondensation reaction in step i) is at least 0.9.

The polycondensation reaction in step i) is generally conducted at temperatures in the range from 80 to 250 °C, preferably in the range from 100 to 220 °C. The upper limit of the temperature is preferably determined by the boiling point of the at least one aprotic polar solvent (component (D)) at standard pressure (1013.25 mbar). The reaction is generally carried out at standard pressure. The reaction is preferably carried out over a time interval of 0.5 to 14 h, particularly in the range from 1 to 12 h.

In a preferred embodiment in step i) a reaction mixture ($R_G$) is converted comprising

| | |
|---|---|
| X mol | of an aromatic dihalogensulfone component (component A)) comprising, based on the total molar amount of the aromatic dihalogensulfone component (component A)) in the reaction mixture ($R_G$), |
| $X^1$ mol.-% | of at least one sulfonated aromatic dihalogensulfone (component (A1)), and |
| $X^2$ mol.-% | of at least one non sulfonated aromatic dihalogensulfone (component (A2)), wherein |
| $X^1$ | is in the range of 20 to 70 and |
| $X^2$ | is in the range of 30 to 80, |
| Y mol | of at least one aromatic dihydroxy compound (component (B)) |
| Z mol | of at least one carbonate compound (component (C)), |

wherein

the ratio of X to Y is in the range of 0.95 to 1.08,

and wherein

Z is in the range of P to Q,

wherein P is calculated according to the following equation:

$$P = Y^*(1.05 + X^1/100^*1.05),$$

and wherein Q is calculated according to the following equation:

$$Q = Y^*(1.05 + X^1/100^*1.4).$$

In a preferred embodiment the sulfonated polyarylenesulfone polymer (sP) obtained in step i) is not separated from the product mixture ($P_G$).

In one embodiment between step i) and step ii) no further process steps are conducted. In another embodiment before or during step ii) at least one further component (FC) may be added to the product mixture ($P_G$). In a further preferred embodiment the sulfonated polyarylenesulfone polymer (sP) in the product mixture ($P_G$) obtained step i) remains in dissolved form before step ii) is conducted.

*Step ii)*

In step ii) the inorganic halide compound formed in step i) during the condensation reaction is removed from the product mixture ($P_G$). To obtain a solution (S) comprising the sulfonated polyarylenesulfone polymer (sP) and component (D).

The inorganic halide compound can be removed by measures commonly known in the art like filtration, centrifugation, decantation etc..

The present invention therefore also provides a process wherein the process comprises the step
ii) filtration, centrifugation and/or decantation of the product mixture ($P_G$) obtained in step i) to obtain the solution (S).

In a preferred embodiment the solution (S) obtained in step ii) comprises no solid inorganic halide compounds. In a further preferred embodiment the solution (S) obtained in step ii) comprises less than 3 wt%, more preferred less than 1.5 wt% and particularly preferred less than 0.5 wt% of inorganic halide components based on the total weight of the solution (S) obtained in step ii).

In a more preferred embodiment the solution (S) obtained in step ii) comprises no solid inorganic compounds.

In a further preferred embodiment the solution (S) obtained in step ii) comprises less than 0.4 wt%, more preferred less than 0.3 wt% and particularly preferred less than 0.2 wt% of inorganic components based on the total weight of the solution (S) obtained in step ii).

In a preferred embodiment the sulfonated polyarylenesulfone polymer (sP) in step ii) is not separated from the solution (S). In one embodiment between step ii) and step iii) no further process steps are conducted.

In a preferred embodiment before step iii) at least one further component (FC) is added to the solution (S).

The sulfonated polyarylenesulfone polymer (sP) in the solution (S) in step ii) remains in dissolved form before step iii) is conducted.

In a particularly preferred embodiment the sulfonated polyarylenesulfone polymer (sP) in the inventive process remains dissolved until step iii) is carried out.

In a further particularly preferred embodiment the sulfonated polyarylenesulfone polymer (sP) is not separated before step iii) is carried out. In other words the inventive process preferably comprises only one separation step (step iii)) of the sulfonated polyarylenesulfone polymer (sP), wherein the membrane (M) is formed.

*Step iii)*

In step iii) the at least one aprotic polar solvent is separated from the solution (S) to obtain the membrane (M). In a preferred embodiment the solution (S) is degassed before step iii) is carried out.

The separation of the at least one aprotic polar solvent from the solution (S) in step iii) can be performed by any method known to the skilled person which is suitable to separate solvents from polymers.

Preferably, the separation of the at least one aprotic polar solvent from the solution (S) in step iii) is carried out via a phase inversion process.

A phase inversion process within the context of the present invention means a process wherein the dissolved sulfonated polyarylenesulfone polymer (sP) is transformed into a solid phase. Therefore, a phase inversion process can also be denoted as a precipitation process. According to step iii) the transformation is preferably performed by separation of the at least one aprotic polar solvent from the sulfonated polyarylenesulfone polymer (sP). The person skilled in the art knows suitable phase inversion processes.

The phase inversion process can, for example, be performed by cooling down the solution (S). During this cooling

down, the sulfonated polyarylenesulfone polymer (sP) comprised in this solution (S) precipitates. Another possibility to perform the phase inversion process is to bring the solution (S) in contact with a protic polar liquid that is a non-solvent for the sulfonated polyarylenesulfone polymer (sP). The sulfonated polyarylenesulfone polymer (sP) will then as well precipitate. Suitable protic polar sovents that are non-solvents for the sulfonated polyarylenesulfone polymer (sP)) are for example protic polar solvents described hereinafter in their liquid state. Another phase inversion process which is preferred within the context of the present invention is the phase inversion by immersing the solution (S) into at least one protic polar solvent.

Therefore, in one embodiment, in step iii) the at least one aprotic polar solvent comprised in the solution (S) is separated from the sulfonated polyarylenesulfone polymer (sP) comprised in the solution (S) by immersing the solution (S) into at least one protic polar solvent.

This means that the membrane (M) in step iii) is formed by immersing the solution (S) into at least one protic polar solvent.

Suitable at least one protic polar solvents are known to the skilled person. Preferred at least one of protic polar solvents are water, methanol, ethanol, n-propanol, isopropanol, glycerol, ethylene glycol and mixtures thereof.

Therefore, in one preferred embodiment, step iii) comprise the following steps:

iii-1) casting the solution (S) provided in step ii) to obtain a film of the solution (S),

iii-2) separating the at least one aprotic polar solvent from the film of the solution (S) obtained in step iii-1) to obtain the membrane (M) which is in the form of a film.

The separating in step iii-2) can be carried out as described above. Preferably the separating in step iiii-2) is carried out by evaporating the at least one aprotic polar solvent from a film of the solution (S)

Therefore, in a particularly preferred embodiment, step iii) comprise the following steps:

iii-1) casting the solution (S) provided in step ii) to obtain a film of the solution (S),

iii-2) evaporating the at least one aprotic polar solvent from the film of the solution (S) obtained in step iii-1) to obtain the membrane (M) which is in the form of a film.

This means that the membrane (M) is formed by evaporating the at least one aprotic polar solvent from a film of the solution (S).

In step iii-1), the solution (S) can be cast by any method known to the skilled person. Usually, the solution (S) is cast with a casting knife, a coma bar, a meyer bar, a slot die or a reverse roll which are preferably heated to a temperature in the range from 20 to 150 °C, preferably in the range from 40 to 100°C, more preferably between 60 and 85°C.

In step iii-1) the solution (S) is usually cast on a substrate (carrier material) that does not react with the sulfonated polyarylenesulfone polymer (sP) and/or the at least one solvent comprised in the solution (S).

Suitable substrates (carrier materials) are for example steel belts, drying cylinders or polymer films. The substrates (carrier materials) are generally not part of the finished membrane (M) but are only used for processing purpose.

It is also possible to cast the solution (S) on a porous support layer which becomes part of the membrane (M).

After step iii) the membrane can be further processed. The membrane can for example be coated with stabilizers or catalysts.

Suitable stabilizers are for example cerium dioxide, cerium containing complexes or titan dioxide.

Suitable catalysts are for example selected from the group consisting of platinum, iridium, ruthenium or palladium in elementary form or in form of their oxides, mixtures or alloys either as powder or deposited onto a catalyst carrier such as $SnO_2$, carbon or $TiO_2$.

To prepare a catalyst coated membrane (CCM), the catalysts can be dispersed in together with a binder in a medium comprising water, alcohols and other solvents. The binder can be a proton conductive polymer like Nafion, sulfonated polyarylethers, sulfonated polystyrenecopolymers. This dispersion is then coated on the membrane by common coating techniques (slot die coating, doctor blade coating, spray coating).

*Component (A)*

Component (A), which is also referred to as the aromatic dihalogensulfone component, comprises at least one sulfonated aromatic dihalogensulfone and at least one non sulfonated aromatic dihalogensulfone.

The at least one sulfonated aromatic dihalogensulfone is also referred to as component (A1). The terms at least one sulfonated aromatic dihalogensulfone and component (A1) in the present invention are used synonymously and

therefore have the same meaning.

The at least one non sulfonated aromatic dihalogensulfone is also referred to as component (A2). The terms at least one non sulfonated aromatic dihalogensulfone and component (A2) in the present invention are used synonymously and therefore have the same meaning.

What is meant herein by "at least one sulfonated aromatic dihalogensulfone" is precisely one sulfonated aromatic dihalogensulfone and also mixtures of two or more sulfonated aromatic dihalogensulfones. Preferably precisely one sulfonated aromatic dihalogensulfone is used.

What is meant herein by "at least one non sulfonated aromatic dihalogensulfone" is precisely one non sulfonated aromatic dihalogensulfone and also mixtures of two or more non sulfonated aromatic dihalogensulfones. Preferably precisely one non sulfonated aromatic dihalogensulfone is used.

In the preferred embodiment described above "X" preferably means the amount of mol of component (A) in the reaction mixture ($R_G$) in step i). "X" herein preferably means the total molar amount of the aromatic dihalogensulfone component (component (A)) in the reaction mixture ($R_G$) in step i). In other words "X" means preferably the sum of the molar amount of component (A1) and component (A2) contained in component (A), preferably contained in the reaction mixture ($R_G$). "$X^1$" herein means the molar amount in mol.-% of component (A1) and "$X^2$" herein means the molar amount in mol.-% of component (A2), based on the total molar amount of component (A) in the reaction mixture ($R_G$).

$X^1$ may be in the range of 20 to 70 mol.-%, preferably in the range of 27.5 to 65 mol.-%, more preferably in the range of 30 to 60 mol.-%, and most preferably in the range of 32.5 to 57.5 mol.-%, in each case based on the total molar amount of the aromatic dihalogensulfone component (component (A)) in the reaction mixture ($R_G$).

$X^2$ may be in the range of 30 to 80 mol.-%, preferably in the range of 35 to 72.5 mol.-%, more preferably in the range of 40 to 70 mol.-%, and most preferably in the range of 42.5 to 67.5 mol.-%, in each case based on the total molar amount of the aromatic dihalogensulfone component (component (A)) in the reaction mixture ($R_G$).

The amount of $X^1$ and $X^2$ generally adds up to 100 mol.-%.

*Component (A1)*

Component (A1), which is also referred to as the sulfonated aromatic dihalogensulfone comprises preferably at least one $-SO_3X^3$ group.

Component (A1) preferably comprises at least one $-SO_3X^3$ group. What is meant herein by "at least one $-SO_3X^3$ group" is that component (A1) can comprise precisely one $-SO_3X^3$ group and also two or more $-SO_3X^3$ groups. Component (A1) more preferably comprises two $-SO_3X^3$ groups.

The general formula $-SO_3X^3$ comprises the sulfonic acid functional group and also derivatives of sulfonic acid functional groups such as sulfonates. In the $-SO_3X^3$ group(s) $X^3$ may be hydrogen and/or one cation equivalent.

By "one cation equivalent" in the context of the present invention is meant one cation of a single positive charge or one charge equivalent of a cation with two or more positive charges, for example Li, Na, K, Mg, Ca, $NH_4$, preferably Na, K. Particularly preferred is Na or K.

Component (A1) is preferably selected from the group consisting of 4,4'-dichlorodiphenylsulfone-3,3'-disulfonic acid and 4,4'-difluorodiphenylsulfone-3,3'-disulfonic acid, and derivatives thereof.

The terms "sulfonic acid" and "$-SO_3X^3$ group" in the context of the present invention are used synonymously and have the same meaning. The term "sulfonic acid" in the 4,4'-dichlorodiphenylsulfone-3,3'-disulfonic acid and 4,4'-difluorodiphenylsulfone-3,3'-disulfonic acid therefore means "$-SO_3X^3$ group", wherein $X^3$ is hydrogen or a cation equivalent.

In one embodiment, component (A1) preferably comprises $-SO_3X^3$ groups with a cation equivalent. Especially preferably, component (A1) is selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt.

Another object of the present invention therefore is a process, wherein component (A1) comprises at least one compound selected from the group consisting of 4,4'-dichlorodiphenylsulfone-3,3'-disulfonic acid, 4,4'-dichloro-diphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt.

In one embodiment, component (A1) comprises not less than 70 wt%, preferably not less than 90 wt%, and more preferably not less than 98 wt% of at least one aromatic dihalogensulfone component comprising at least one $-SO_3X^3$ group selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt, based on the overall weight of component (A1) in the reaction mixture

($R_G$).

In a further particularly preferred embodiment, component (A1) consists of at least one aromatic dihalogensulfone comprising at least one $-SO_3X^3$ group selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt.

In these embodiments, 4,4'-dichlorodiphenylsulfone-3,3'-disulfonic acid dipotassium salt and 4,4'-dichlorodiphenylsulfone-3,3'-disulfonic acid disodium salt are particularly preferable for use as component (A1).

In a further, particularly preferred embodiment, component (A1), consists of 4,4'-dichlorodiphenylsulfone-3,3'-disulfonic acid dipotassium salt or 4,4'-dichlorodiphenylsulfone-3,3'-disulfonic acid disodium salt.

*Component (A2)*

Component (A2), which is also referred to as the non sulfonated aromatic dihalogensulfone component comprises preferably no $-SO_3X^3$ groups.

Preferably, component (A2) comprises not less than 80 wt%, preferably not less than 90 wt%, and more preferably not less than 98 wt% of at least one aromatic dihalogensulfone selected from the group consisting of 4,4'-dichlorodiphenylsulfone and 4,4'-difluorodiphenylsulfone, based on the overall weight of component (A2) in reaction mixture ($R_G$). The weight percentages here in relation to component (A2) further relate to the total sum of the 4,4'-dichlorodiphenylsulfone used and of the 4,4'-difluorodiphenylsulfone used.

Another object of the present invention therefore is a process, wherein component (A2) comprises not less than 80 wt% of at least one aromatic dihalogensulfone selected from the group consisting of 4,4'-dichlorodiphenylsulfone and 4,4'-difluorodiphenylsulfone, based on the overall weight of component (A2) in reaction mixture ($R_G$).

In a further particularly preferred embodiment, component (A2) consists of at least one aromatic dihalogensulfone selected from the group consisting of 4,4'-dichlorodiphenylsulfone and 4,4'-difluorodiphenylsulfone.

In these embodiments, 4,4'-dichlorodiphenylsulfone is particularly preferable for use as component (A2).

In a further, particularly preferred embodiment, component (A2), consists of 4,4'-dichlorodiphenylsulfone.

Preferably, component (A2) is selected from the group consisting of 4,4'-dichlorodiphenylsulfone and 4,4'-difluorodiphenylsulfone.

*Component (B)*

Component (B), which is also referred to as the aromatic dihydroxy compound generally comprises two hydroxy groups.

What is meant herein by "at least one aromatic dihydroxy compound" is precisely one aromatic dihydroxy compound and also mixtures of two or more aromatic dihydroxy compounds. Preferably precisely one aromatic dihydroxy compound is used.

In the preferred embodiment described above "Y" preferably means the amount of mol of component (B) in the reaction mixture ($R_G$) in step i). "Y" herein preferably means the total molar amount of the aromatic dihydroxy compound (component (B)) in the reaction mixture ($R_G$) in step i).

Preferably, component (B) is selected from the group consisting of 4,4'-dihydroxybiphenyl, 4,4'-dihydroxydiphenylsulfone, bisphenol A (2,2-bis(4-hydroxyphenyl)propane), 4,4'-dihydroxybenzophenone and hydroquinone. From among the aforementioned aromatic dihydroxy components, 4,4'-dihydroxybiphenyl, 4,4'-dihydroxydiphenyl sulfone and bisphenol A are preferable, while 4,4'-dihydroxybiphenyl is particularly preferable.

The present invention accordingly also provides a method wherein component (B) is selected from the group consisting of 4,4'-dihydroxybiphenyl, 4,4'-dihydroxydiphenyl sulfone, bisphenol A, 4,4'-dihydroxybenzophenone and hydroquinone.

Preferably, component (B) comprises not less than 80 wt%, preferably not less than 90 wt% and more preferably not less than 98 wt% of 4,4'-dihydroxybiphenyl, based on the overall weight of component (B) in reaction mixture ($R_G$).

Another object of the present invention therefore is a process, wherein component (B) comprises not less than 80 wt% 4,4'-dihydroxybiphenyl, based on the overall weight of component (B) in reaction mixture ($R_G$).

The weight percentages here in relation to component (B) further relate to the total sum of the 4,4'-dihydroxybiphenyl, 4,4'-dihydroxydiphenyl sulfone, bisphenol A (2,2-bis-(4-hydroxyphenyl)propane), 4,4'-dihydroxybenzophenone and hydroquinone used.

In a further particularly preferred embodiment, component (B) consists of at least one aromatic dihydroxy component selected from the group consisting of 4,4'-dihydroxybiphenyl, 4,4'-dihydroxydiphenylsulfone, bisphenol A (2,2-bis(4-hydroxyphenyl)propane), 4,4'-dihydroxybenzophenone and hydroquinone.

In these embodiments, 4,4'-dihydroxybiphenyl, bisphenol A and 4,4'-dihydroxydiphenylsulfone are particularly

preferable for use as component (B), while 4,4'-dihydroxybiphenyl is most preferable.

*Component (C)*

The reaction mixture ($R_G$) comprises at least one carbonate compound as component (C). The term "at least one carbonate compound" in the present case, is understood to mean exactly one carbonate compound and also mixtures of two or more carbonate compounds. The at least one carbonate compound is preferably at least one metal carbonate. The metal carbonate is preferably anhydrous. In the present case the terms "at least one carbonate compound" and "component (C)" are used synonymously and therefore have the same meaning.

Preference is given to alkali metal carbonates and/or alkaline earth metal carbonates as metal carbonates. At least one metal carbonate selected from the group consisting of sodium carbonate, potassium carbonate and calcium carbonate is particularly preferred as metal carbonate. Potassium carbonate is most preferred.

For example, component (C) comprises not less than 50 wt%, more preferred not less than 70 wt% by weight and most preferred not less than 90 wt% of potassium carbonate based on the total weight of the at least one carbonate component in the reaction mixture ($R_G$).

Another object of the present invention therefore is a process, wherein component (C) comprises not less than 50 wt% of potassium carbonate based on the total weight of component (C) in the reaction mixture ($R_G$).

In a preferred embodiment component (C) consists of potassium carbonate. Potassium carbonate having a volume weighted average particle size of less than 200 $\mu$m is preferred as potassium carbonate more preferred less than 100 $\mu$m more even more preferred less than 70 $\mu$m and most preferred less than 50 $\mu$m. The volume weighted average particle size of the potassium carbonate is determined in a suspension of potassium carbonate in a mixture chlorobenzene/sulfolane (60/40 by weight) using a particle size analyser.

In the preferred embodiment described above "Z" preferably means the amount of mol of component (C) in the reaction mixture ($R_G$) in step i). "Z" herein means preferably the total molar amount of the at least one carbonate component (component (C)) in the reaction mixture ($R_G$).

Z is in the range of P to Q.

"P" is calculated according to the following equation:

$$P = Y^*(1.05 + X^1/100^*1.05)$$

"Q" is calculated according to the following equation:

$$Q = Y^*(1.05+X^1/100^*1.4)$$

In this equations Y is the value of the molar amount of component (B) in the reaction mixture ($R_G$) and $X^1$ is also the value of the mol.-% of component (A1) in reaction mixture ($R_G$).

*Component (D)*

The reaction mixture ($R_G$) comprises preferably at least one aprotic polar solvent as component (D). "At least one aprotic polar solvent", according to the invention, is understood to mean exactly one aprotic polar solvent and also mixtures of two or more aprotic polar solvents. In the present case the terms "at least one aprotic polar solvent" and "component (D)" are used synonymously and therefore have the same meaning.

Suitable aprotic polar solvents are, for example, selected from the group consisting of anisole, dimethylformamide, dimethylsulfoxide, sulfolane, N-methylpyrrolidone, N-ethylpyrrolidone and N-dimethylacetamide.

Preferably, component (D) is selected from the group consisting of N-methylpyrrolidone, N-dimethylacetamide, dimethylsulfoxide and dimethylformamide. N-methylpyrrolidone is particularly preferred as component (D).

It is preferred that component (D) comprises not less than 50 wt%, preferably not less than 70 wt% and more preferably not less than 90 wt% of at least one solvent selected from the group consisting of N-methylpyrrolidone, N-dimethylacetamide, dimethylsulfoxide and dimethylformamide based on the total weight of component (D) in the reaction mixture ($R_G$). N-methylpyrrolidone is particularly preferred as component (D).

Another object of the present invention therefore is a process, wherein component (D) comprises not less than 50 wt% of at least one solvent selected from the group consisting of N-methylpyrrolidone, N-dimethylacetamide, dimethylsulfoxide and dimethylformamide based on the total weight of component (D) in the reaction mixture ($R_G$).

In a preferred embodiment, component (D) consists of N-methylpyrrolidone. N-methylpyrrolidone is also referred to as NMP or N-methyl-2-pyrrolidone.

*Further Component (FC)*

The membrane (M) comprises in a preferred embodiment at least one further component as component (FC). "At least one further component", according to the invention, is understood to mean exactly one further component and also mixtures of two or more further components. In the present case the terms "at least further component" and "component (FC)" are used synonymously and therefore have the same meaning.

In a preferred embodiment component (FC) is added in the inventive process before or during step iii), preferably before step iii) is carried out. In another preferred embodiment component (FC) is added to the solution (S) obtained in step ii) before step iii) is carried out.

Component (FC) is preferably at least on component selected from the group of stabilizers and hydrophilic polymers.

Preferred as component (FC) are components that are soluble in component (D), the at least one aprotic organic solvent.

Suitable stabilizers are for example heat stabilizers, oxidation preventing stabilizers or organic radical scavengers.

As suitable stabilizers sterically hindered phenols, phosphites or chinones can be used. Suitable radical scavengers are for example (4-Hydroxy-2,2,6,6-tetramethylpiperidin-1-yl)oxyl (TEMPO).

More details about suitable additives can be found in P. Gijsman, "Polymer Stabilisation" in Handbook of Environmental Degradation of materials, 3rd Ed., William Andrew, 2018.

Suitable hydrophilic polymers are for example polyvinylpyrrolidone (PVP), polyethylene oxides, polyethylene oxide-polypropylene oxide-copolymers.

*Membrane (M) containing a sulfonated polyarylenesulfone polymer (sP)*

Another object of the present invention is a membrane (M) comprising the sulfonated polyarylenesulfone polymer (sP) obtained by the inventive process.

Sulfonated polyarylenesulfone polymers (sP) obtained in step i) of the inventive process for the preparation of the membrane (M) preferably comprise repeating units of the general formula I:
where

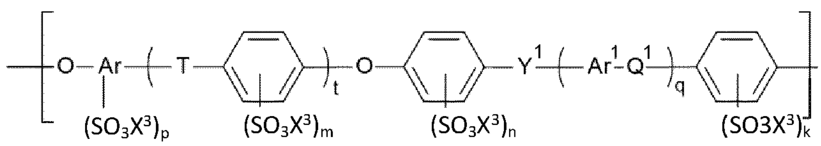 (I)

t and q : are each independently 0, 1, 2 or 3,

$Q^1$, T and $Y^1$: are each independently a chemical bond or selected from -O-, -S-, $-SO_2-$, -S(=O)-, -C(=O)-, -N=N-, and $-CR^aR^b-$, wherein $R^a$ and $R^b$ are each independently a hydrogen atom or a $C_1$-$C_{12}$alkyl, $C_1$-$C_{12}$alkoxy or $C_6$-$C_{18}$-aryl group, and wherein at least one of Q, T and Y is $-SO_2-$,

Ar and $Ar^1$: are each independently $C_6$-$C_{18}$ aryl, wherein said $C_6$-$C_{18}$ aryl is unsubstituted or substituted with at least one substituent selected from $C_1$-$C_{12}$ alkyl, $C_1$-$C_{12}$ alkoxy, $C_6$-$C_{18}$ aryl, halogen and $-SO_3X$,

p, m, n, and k: are each independently 0, 1, 2, 3 or 4, with the proviso that the sum total of p, m, n and k is not less than 1, and

$X^3$: is hydrogen or one cation equivalent.

Another object of the present invention, therefore, is a membrane (M) comprising a sulfonated polyarylenesulfone polymer (sP), wherein the sulfonated polyarylenesulfone polymer (sP) comprises repeating units of the general formula (I) as defined above.

In a preferred embodiment the sulfonated polyarylenesulfone polymer (sP) contained in the membrane (M) comprises at least 80 mol.-% of repeating units of the general formula (I) based on the total molar amount of the sulfonated polyarylenesulfone polymer (sP) contained in the membrane (M).

If $Q^1$, T, or $Y^1$, with the abovementioned preconditions, is a chemical bond, this means that the adjacent group on the left-hand side and the adjacent group on the right-hand side have direct linkage to one another by way of a chemical

bond.

$R^a$ and $R^b$ are each independently hydrogen or $C_1$-$C_{12}$ alkyl.

Preferred $C_1$-$C_{12}$ alkyl groups include linear and branched, saturated alkyl groups of 1 to 12 carbon atoms. The following moieties are suitable in particular: $C_1$-$C_6$ alkyl, such as methyl, ethyl, n-propyl, i-propyl, n-butyl, sec-butyl, 2- or 3-methylpentyl or comparatively long-chain moieties such as unbranched heptyl, octyl, nonyl, decyl, undecyl, lauryl, and the branched analogs thereof.

Alkyl moieties in the $C_1$-$C_{12}$ alkoxy groups used include the above-defined alkyl groups of 1 to 12 carbon atoms. Preferably used cycloalkyl moieties include in particular $C_3$-$C_{12}$ cycloalkyl moieties, e.g., cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, -propyl, -butyl, -pentyl, -hexyl, -cyclohexylmethyl, -dimethyl, -trimethyl.

Ar and $Ar^1$ are each independently $C_6$-$C_{18}$ aryl. Proceeding from the starting materials hereinbelow, Ar preferably derives from an electron-rich aromatic substance very susceptible to electrophilic attack, preferably selected from the group consisting of sulfonated or unsulfonated hydroquinone, resorcinol, dihydroxynaphthalene, in particular 2,7-dihydroxynaphthalene. $Ar^1$ is preferably an unsubstituted $C_6$ or $C_{12}$ arylene group.

Ar and $Ar^1$ in the preferred embodiment of formula (I) are each preferably selected independently from sulfonated or unsulfonated 1,4-phenylene, 1,3-phenylene, naphthylene, in particular 2,7-dihydroxynaphthalene and 4,4'-bisphenylene.

Preferred are membranes (M) containing a sulfonated polyarylenesulfone polymer (sP) having one or more of the following structural units (Ia) to (Io):

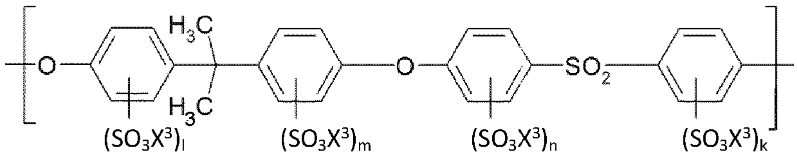

(Ia)

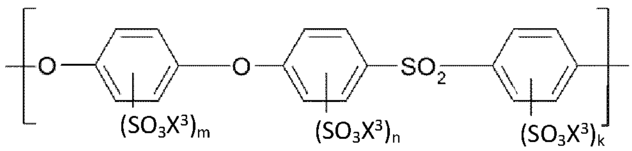

(Ib)

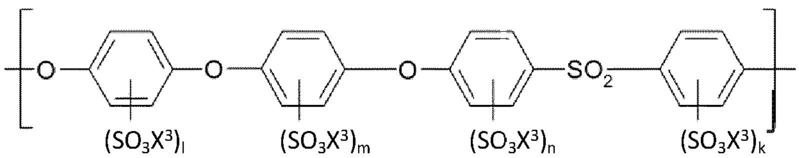

(Ic)

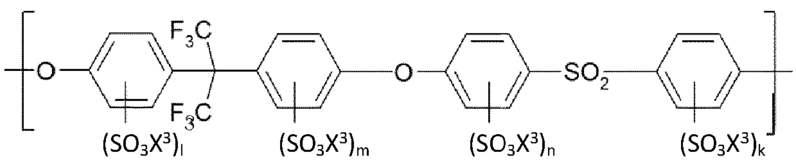

(Id)

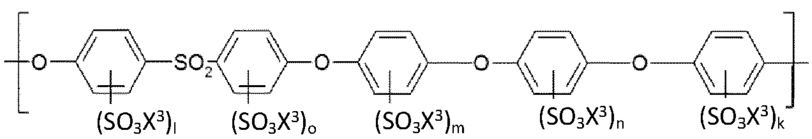

(Ie)

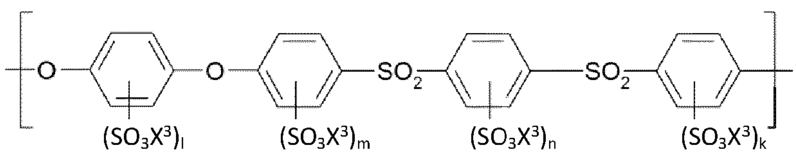

(If)

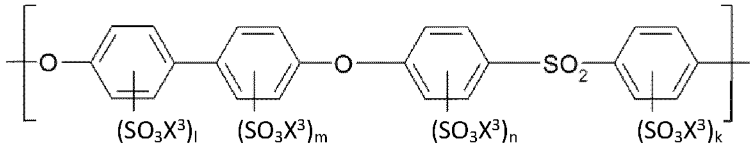

(Ig)

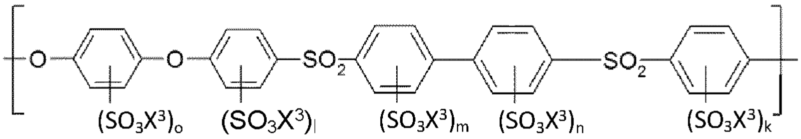

(Ih)

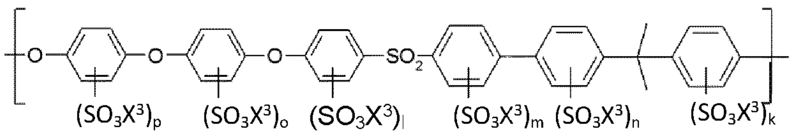

(Ij)

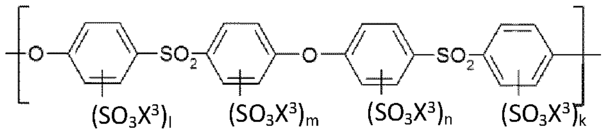

(Ik)

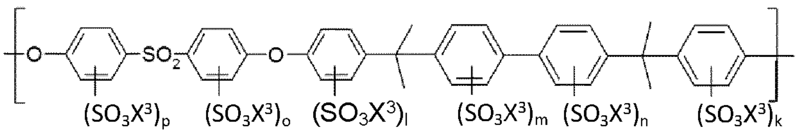

(Il)

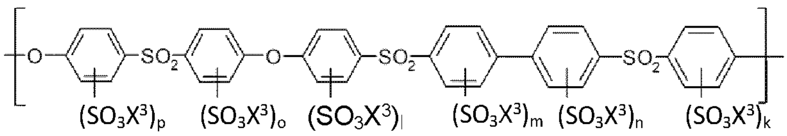

(Im)

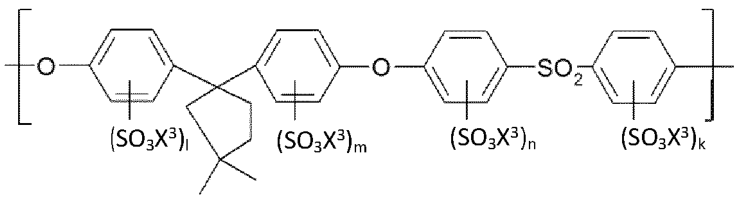

(In)

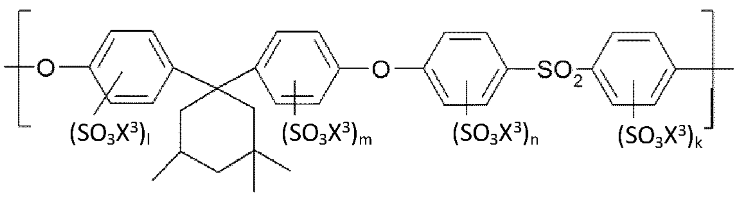

(Io)

where

l, k, m, n, o, p are each independently 0, 1, 2, 3 or 4 subject to the proviso that the sum total of l, k, m, n, o and p is ≥1, and

$X^3$ is hydrogen or one cation equivalent.

By "one cation equivalent" in the context of the present invention is meant one cation of a single positive charge or

one charge equivalent of a cation with two or more positive charges, for example Li, Na, K, Mg, Ca, $NH_4$, preferably Na, K.

In addition to the preferred building blocks (Ia) to (Io), preference is also given to those structural units in which one or more sulfonated or unsulfonated 1,4-dihydroxyphenyl units are replaced by resorcinol or dihydroxynaphthalene.

Copolymers constructed of the various structural units in combination or of sulfonated and non-sulfonated structural units are also usable.

Structural units (Ia), (Ib), (Ig) and (Ik) or copolymers thereof are used with particular preference as repeat unit of general formula (I).

In one particularly preferred embodiment, Ar is 1,4-phenylene, t is 1, T is a chemical bond, $Y^1$ is $-SO_2-$, q is 0, p is 0, m is 0, n is 1 and k is 1. Sulfonated polyphenylenesulfones constructed of this recited structural repeat unit are denoted sPPSU.

In a particularly preferred embodiment, Ar is 1,4-phenylene, t is 0, Y is $-SO_2-$, q is 0, n is 0 and k is 0. Polyarylenesulfones constructed of this recited structural repeat unit are denoted sulfonated polyether ether sulfones (sPEES).

In one advantageous embodiment, the membrane (M) contains a sulfonated polyarylenesulfone polymer (sP) comprising

a non sulfonated repeat unit of formula (1)

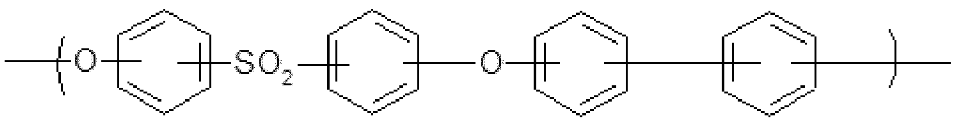

(1)

and a sulfonated repeat unit of formula (2)

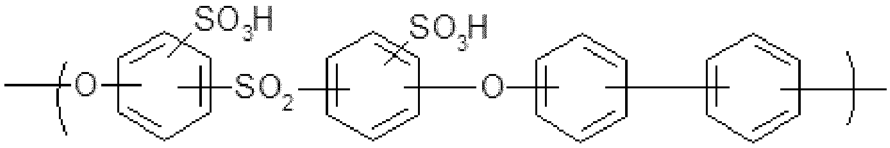

(2)

In particular, the sulfonated polyarylenesulfone polymer (sP) contained in the membrane (M) consists exclusively of non-sulfonated repeating units of formula (1) and sulfonated repeat units of formula (2).

In a very advantageous embodiment, the sulfonated polyarylenesulfone polymer (sP) contained in the membrane comprises

a non sulfonated repeat unit of formula (1a)

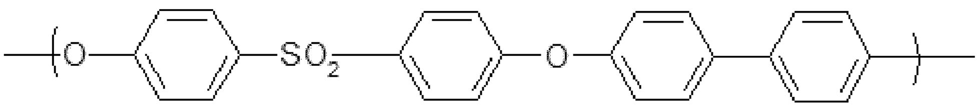

(1a)

and a sulfonated repeat unit of formula (2a)

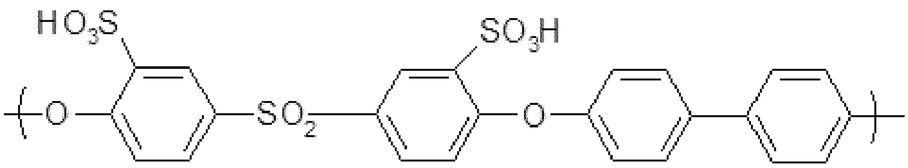

(1b)

In particular, the sulfonated polyarylenesulfone polymer (sP) contained in the membrane (M) consists exclusively of non-sulfonated repeat units of formula (1a) and sulfonated repeating units of formula (2a).

The sulfonated polyarylenesulfone polymers (sP) contained in the membrane (M) according to the present invention preferably have a viscosity number of 20 ml/g to 250 ml/g, preferably of 50 ml/g to 200 ml/g. This viscosity number is quantified according to DIN EN ISO 1628-1 in a 1% solution of N-methylpyrrolidone (NMP) at 25°C. The measurement can also be done at lower polymer concentration, e.g. 0.5%.

The weight average molecular weight ($M_w$) of the sulfonated polyarylenesulfone polymer (sP) contained in the membrane (M) is generally in the range from 10000 to 250 000 g/mol, preferably in the range from 15000 to 200 000 g/mol

and more preferably in the range from 18 000 to 150 000 g/mol. The weight average molecular weights ($M_w$) are measured using gel permeation chromatography (GPC). Dimethylacetamide (DMAc) was used as solvent and narrowly distributed polymethyl methacrylate was used as standard in the measurement.

In a preferred embodiment the membrane (M) obtained by the inventive process has a good balance of low swelling and high conductivity.

*Device comprising the membrane (M)*

Another object of the present invention is a device comprising a membrane (M) obtained by the inventive process. The device is preferably a fuel cell or an electrolysis cell.

Another object of the present invention therefore is a fuel cell comprising a membrane (M) obtained by the inventive process. Moreover, another object of the invention is an electrolysis cell comprising a membrane (M) obtained by the inventive process. Moreover, another object of the invention is the use of the membrane (M) obtained by the inventive process in an electrolysis cell or a fuel cell.

For the use of the membrane (M) obtained by the inventive process, in a preferred embodiment, the membrane (M) is activated. Activation may be carried out by contacting the membrane (M) with an aqueous acid solution like aqueous inorganic acids. Preferably an aqueous solution of sulfuric acid ($H_2SO_4$) is used for activation. The concentration of the aqueous acid solution is preferably in the range of 0.1 to 4.0 M. After contacting the membrane (M) with an aqueous acid solution like aqueous sulfuric acid the membrane may be contacted with water, preferably DI water. After activation the membrane (M) is typically obtained in the $H^+$-form.

In other words after activation the sulfonated polyarylenesulfone polymer (sP) contained in the membrane (M) comprise at least 70 mol.-%, more preferred at least 80 mol.-% and particularly preferred at least 90 mol.-% of $-SO_3H$ groups, based on the total molar amount of $-SO_3X^3$ groups contained in the sulfonated polyarylenesulfone polymer (sP).

The present invention is more particularly elucidated by the following examples without being restricted thereto.

<u>Components used:</u>

| | |
|---|---|
| DCDPS | 4,4'-dichlorodiphenyl sulfone, |
| sDCDPS | 4,4'-dichlorodiphenylsulfone-3,3'-disulfonic acid disodium salt |
| BP | 4,4'-dihydroxybiphenyl, |
| $K_2CO_3$: | potassium carbonate, anhydrous, average particle size 32.6 $\mu$m |
| NMP: | N-methylpyrrolidone, anhydrous |

The viscosity number VN of the sulfonated polyarylenesulfone polymer (sP) was measured according to DIN ISO 1628-1 in a 0.5% by weight NMP solution.

The incorporation ratio (the incorporation rate) of the sDCDPS was determined by $^1H$-NMR in $CDCl_3$. Furthermore, the polymer content of the polymer solutions after filtration was also quantified by $^1H$-NMR in $CDCl_3$.

The isolation of the sulfonated polyarylenesulfone polymer (sP) unless otherwise indicated is carried out, by dripping an NMP solution of the sulfonated polyarylenesulfone polymers (sP) into isopropanol at room temperature. The drop height is 0.5 m. The throughput is about 2.5 l per hour. The beads obtained are then extracted with water (water throughput 160 l/h) at 85°C for twenty hours. The beads are then dried at a temperature below the glass transition temperature $T_g$ to a residual moisture content of less than 1.0% by weight. In some cases, the beads are washed at least one time with isopropanol and are then dried at a temperature below the Tg preferably in the vacuum to a residual isopropanol content below 1 wt%. In some cases, powder is obtained by the precipitation, the powder is then filtered off and washed with isopropanol for at least one time. The powder can then be extracted with water or isopropanol and is finally dried at a temperature below the Tg of the product, preferably in the vacuum to a residual moisture or isopropanole content of less than 1 wt%.

The filtration of the product mixture was done in a heated metal pressure filter using a filter with a 5 $\mu$m pore size and 3 bar $N_2$-pressure. The filter was heated to 60°C to reduce the viscosity of the reaction mixture.

The yield of polymer after precipitation was determined gravimetrically.

<u>Synthesis Example 1:</u>

In a 4 liter glass reactor fitted with a thermometer, a gas inlet tube and a Dean-Stark-trap, 288.599 g (1.005 mol) of DCDPS, 257.906 g (0.525 mol) of sDCDPS, 279.315 g (1.50 mol) BP and 308.209 g (2.23 mol) of potassium carbonate with a volume average particle size of 32.6 $\mu$m were suspended in 938 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation, losses in NMP were replenished.

After a reaction time of 9 hours, the reaction was stopped by the addition of 1750 ml NMP and cooling down to room temperature (within one hour). The potassium chloride formed in the reaction was removed by filtration. The obtained polymer solution was then divided in two equal portions. One portion was precipitated in isopropanol, the resulting polymer beads were separated and then extracted with hot water (85°C) for 20 h. Then the beads were dried at 120°C for 24 h at reduced pressure (< 100 mbar). The other part of the solution was used for membrane preparation. The polymer content of this solution was 18.1 wt.%.

Synthesis Example 2:

In a 4 liter glass reactor fitted with a thermometer, a gas inlet tube and a Dean-Stark-trap, 267.059 g (0.93 mol) of DCDPS, 294.750 g (0.60 mol) of sDCDPS, 279.315 g (1.50 mol) BP and 317.883 g (2.30 mol) of potassium carbonate with a volume average particle size of 32.6 μm were suspended in 938 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation, losses in NMP were replenished.

After a reaction time of 9 hours, the reaction was stopped by the addition of 2312 ml NMP and cooling down to room temperature (within one hour). The potassium chloride formed in the reaction was removed by filtration. The obtained polymer solution was separated into portions of equal weight. One portion was then precipitated in isopropanole, the resulting polymer beads were separated and then extracted with hot water (85°C) for 20 h. Then the beads were dried at 120°C for 24 h at reduced pressure (< 100 mbar). The other parts of the solution was used for membrane preparation. The polymer content of this solution was 18.1 wt.%.

**Table 1:**

| Example | 1 | 2 |
|---|---|---|
| Condensation time [h] | 9 | 9 |
| V.N.[ml/g] | 70.1 | 71. 9 |
| sDCDPS-cont. units [mol%] | 32.9 | 38.1 |
| Yield [wt.%] | 88 | 81 |

To prepare the membranes, solutions of the precipitated sulfonated polyarylenesulfone polymer (sP) from examples 1 and 2 in NMP were prepared using a polymer content of 17.5 wt.%. The solutions made from the precipitated sulfonated polyarylenesulfone polymer (sP) obtained in examples1 and 2 are denominated hereinafter 1P and 2P.

The solutions obtained in examples 1 and 2, which were not precipitated, were diluted with NMP to achieve a polymer content of 17.5 wt.% and are denominated hereinafter 1S and 2S.

*Membrane preparation Method 1*

Membranes from the solutions 1P, 2P, 1S and 2S were prepared by casting these solutions with a doctor blade at a speed of 5 mm/s at a temperature of 60°C onto a glass plate. The glass plate was transferred into a vacuum oven and the temperature was gradually increased to 100°C and kept there for 12 h. After cooling to room temperature, the plates were put into a water bath, which led to a detachment of the membrane from the glass plate. The wet membrane was then fixed and dried in the vacuum for 12 h at 120°C. The membrane obtained from solution 1P hereinafter is called 1PM1. The membrane obtained from solution 2P hereinafter is called 2PM1. The membrane obtained from solution 1S hereinafter is called 1SM1. The membrane obtained from solution 2S hereinafter is called 2SM1.

*Membrane preparation Method 2*

Membranes from the solutions 1P, 2P, 1S and 2S were also prepared, wherein casting was also done according to the following procedure: To produce a single layer film, an automatic film applicator and a universal applicator from Zehntner were used. The application solutions 1P, 2P, 1S and 2S were applied to a PET substrate (Hostaphan®, Mitsubishi Polyester Film). The gap width of the doctor blade was chosen so that the layer after drying at 70°C had a thickness of 60 μm. Subsequently the film was delaminated from the PET carrier for further processing. The membrane obtained from

solution 1P hereinafter is called 1PM2. The membrane obtained from solution 2P hereinafter is called 2PM2. The membrane obtained from solution 1S hereinafter is called 1SM2. The membrane obtained from solution 2S hereinafter is called 2SM2.

The membranes prepared as described were cut into the required size ( 5x5 cm). For activation the membranes were immersed into 0.5M $H_2SO_4$ at 80°C for 2h. Subsequently the membranes were immersed into DI water (MiliQ 18.2 MOhm) at 80°C for another 2h and finally stored in a fresh batch of DI water at room temperature. The swelling of the membrane in xy direction was determined by measuring the respective length before and after activation. Swelling in z direction was determined by measuring the thickness of the membrane before and after activation using a micrometer. To determine the conductivity, the membranes were sandwiched into a purpose made teflon cell, equipped with two rectangular gold electrodes (0.25 $cm^2$). A constant pressure was achieved via adjusting the torque of the 4 screws to 4 Nm.

Table 2:

| Membrane | 1PM1 | 2PM1 | 1SM1 | 2SM1 | 1SM2 | 2SM2 |
|---|---|---|---|---|---|---|
| Degree of swelling xy [%] | 36 | 44 | 34 | 40 | 32 | 37 |
| Conduct. [mS/cm] | 10.3 | 12.7 | 12.5 | 15 | 13 | 15.4 |

The membranes obtained from the direct use of the sulfonated polyarylenesulfone polymer (sP) solution show less swelling and at the same time improved conductivity.

*Preparation of a catalyst coated Membrane (CCM)*

For the preparation of a catalyst coated membrane CCM the activated membrane 1SM1 (in the $H^+$-form) was dried at room temperature sandwiched between two porous PE sheets (SP Bel-Art Fritware Porous Polyethylene Sheet Medium Porosity, 0,125 in. Thick) to avoid curling.

Catalyst coating of the membrane 1SM1 was done by spray coating of a catalyst ink (91.6wt% H2O, 3.4wt% Nafion, 0.8wt% Catalyst, 4,2wt% Dispersing agent onto both sides of the membrane 1SM1 which was placed onto a hot plate at 60°C. After both sides were coated (anode side with 2 mg Ir black $cm^{-2}$ and cathode side with 1 mg Pt black cm-2), the catalyst coated membranes 1SM1 was calendared at 130°C. The final CCM 1SM1 was then assembled into a single cell PEM test equipment and subjected to polarization curves at 80°C.

Another catalyst coated membrane was prepared using the activated membrane 1PM1, wherein the preparation was done as described above.

As a comparative example a state of the art Nafion117, coated with the same catalyst amount was measured.

With the CCM 1SM1 a behavior comparable to Nafion 117 was achieved (Figure 1), while the CMC 1PM1 showed much higher resistance.

## Claims

1. A process for the preparation of a membrane (M) containing a sulfonated polyarylenesulfone polymer (sP) comprising the steps

    i) converting a reaction mixture ($R_G$) comprising

        an aromatic dihalogensulfone component (component (A)) comprising at least one sulfonated aromatic dihalogensulfone (component (A1)), and at least one non sulfonated aromatic dihalogensulfone (component (A2)),
        at least one aromatic dihydroxy compound (component (B)),
        at least on carbonate compound (component (C)), and
        at least one aprotic polar solvent (component (D)),
        to obtain a product mixture ($P_G$) comprising a sulfonated polyarylenesulfone polymer (sP), the at least one aprotic polar solvent and at least one inorganic halide compound,

    ii) separating the at least one inorganic halide from the product mixture ($P_G$) to obtain a solution (S) comprising the sulfonated polyarylenesulfone polymer (sP) and the at least one aprotic polar solvent,
    iii) separating the at least one aprotic polar solvent from the solution (S) to obtain the membrane (M) containing the

sulfonated polyarylenesulfone polymer (sP),

wherein the sulfonated polyarylenesulfone polymer (sP) in the solution (S) in step ii) remains in dissolved form before step iii) is conducted.

2. The process according to claim 1, wherein component (A1) comprises at least one compound selected from the group consisting of 4,4'-dichlorodiphenylsulfone-3,3'-disulfonic acid, 4,4'-dichlorodiphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid, 4,4'-difluorodiphenylsulfone-3,3'-disulfonic acid disodium salt and 4,4'-difluorodiphenylsulfone-3,3'-disulfonic acid dipotassium salt.

3. The process according to claim 1 or 2, wherein component (A2) comprises not less than 80 wt% of at least one aromatic dihalogensulfone selected from the group consisting of 4,4'-dichlorodiphenylsulfone and 4,4'-difluorodiphenylsulfone, based on the overall weight of component (A2) in reaction mixture ($R_G$).

4. The process according to any of claims 1 to 3, wherein component (B) comprises not less than 80 wt% 4,4'-dihydroxybiphenyl, based on the overall weight of component (B) in reaction mixture ($R_G$).

5. The process according to any of claims 1 to 4, wherein component (C) comprises not less than 50 wt% of potassium carbonate based on the total weight of component (C) in the reaction mixture ($R_G$).

6. The process according to any of claims 1 to 5, wherein component (D) comprises not less than 50 wt% of at least one solvent selected from the group consisting of N-methylpyrrolidone, N-dimethylacetamide, dimethylsulfoxide and dimethylformamide based on the total weight of component (D) in the reaction mixture ($R_G$).

7. The process according to any of claims 1 to 6, wherein component (A) comprises 20 to 70 mol.-% of component (A1) and 30 to 80 mol.-% of component (A1) based on the total molar amount of component (A) in the reaction mixture ($R_G$).

8. The process according to any of claims 1 to 7, wherein step iii) comprise the following steps

iii-1) casting the solution (S) provided in step ii) to obtain a film of the solution (S),
iii-2) evaporating the at least one aprotic polar solvent from the film of the solution (S) obtained in step iii-1) to obtain the membrane (M) which is in the form of a film.

9. The process according to any of claims 1 to 8, wherein the separating of the at least one aprotic polar solvent from the solution (S) in step iii) is performed by a phase inversion process.

10. Membrane (M) obtained by the process according to any of claims 1 to 9.

11. Membrane (M) according to claim 10 comprising at least one catalyst coating.

12. A catalyst coated membrane comprising a membrane (M) according to claims 10 or 11, wherein the catalyst layers for anode and cathode are coated on both sides of the membrane (M) with a catalyst dispersion comprising a binder, wherein the binder is selected from the group consisting of Nafion and Nafion-type polymers (PFSA), sulfonated polyarylenesulfone polymers (sP) and sulfonated styrenecopolymers.

13. A catalyst coated membrane according to claim 12, wherein the binder in the catalyst dispersion and the membrane (M) comprise the same sulfonated polyarylenesulfone polymers (sP)

14. Fuel cell comprising a membrane (M) according to claim 10 or 11.

15. Electrolysis or electrodialysis cell comprising a membrane (M) according to claim 10 or 11.

16. Use of the membrane (M) according to claim 10 or 11 in an electrolytic cell, electrodialysis cell or a fuel cell.

17. Process for the preparation of electrical energy and/or hydrogen using the membrane (M) according to claim 10 or 11.

## Patentansprüche

1. **1.** Verfahren zur Herstellung einer Membran (M), die ein sulfoniertes Polyarylensulfonpolymer (sP) enthält, umfassend die Schritte

   i) Umsetzen eines Reaktionsgemischs ($R_G$), umfassend eine aromatische Dihalogensulfon-Komponente (Komponente (A)), umfassend

   mindestens ein sulfoniertes aromatisches Dihalogensulfon (Komponente (A1)) und mindestens ein nicht sulfoniertes aromatisches Dihalogensulfon (Komponente (A2)),
   mindestens eine aromatische Dihydroxyverbindung (Komponente (B)),
   mindestens eine Carbonatverbindung (Komponente (C)) und mindestens ein aprotisches polares Lösungsmittel (Komponente (D)),
   unter Erhalt eines Produktgemischs ($P_G$), das ein sulfoniertes Polyarylensulfonpolymer (sP), das mindestens eine aprotische polare Lösungsmittel und mindestens eine anorganische Halogenidverbindung umfasst,

   ii) Abtrennen des mindestens einen anorganischen Halogenids aus dem Produktgemisch ($P_G$) unter Erhalt einer Lösung (S), die das sulfonierte Polyarylensulfonpolymer (sP) und das mindestens eine aprotische polare Lösungsmittel umfasst,
   iii) Abtrennen des mindestens einen aprotischen polaren Lösungsmittels aus der Lösung (S) unter Erhalt der Membran (M), die das sulfonierte Polyarylensulfonpolymer (sP) enthält,

   wobei das sulfonierte Polyarylensulfonpolymer (sP) in der Lösung (S) in Schritt ii) vor der Durchführung von Schritt iii) in gelöster Form bleibt.

2. **2.** Verfahren nach Anspruch 1, wobei Komponente (A1) mindestens eine Verbindung umfasst, die aus der Gruppe bestehend aus 4,4'-Dichlordiphenylsulfon-3,3'-disulfonsäure, 4,4'-Dichlordiphenylsulfon-3,3'-disulfonsäure-Dinatriumsalz, 4,4'-Dichlordiphenylsulfon-3,3'-disulfonsäure-Dikaliumsalz, 4,4'-Difluordiphenylsulfon-3,3'-disulfonsäure, 4,4'-Difluordiphenylsulfon-3,3'-disulfonsäure-Dinatriumsalz und 4,4'-Difluordiphenylsulfon-3,3'-disulfonsäure-Dikaliumsalz ausgewählt ist.

3. **3.** Verfahren nach Anspruch 1 oder 2, wobei Komponente (A2) nicht weniger als 80 Gew.-% mindestens eines aromatischen Dihalogensulfons, das aus der Gruppe bestehend aus 4,4'-Dichlordiphenylsulfon und 4,4'-Difluordiphenylsulfon ausgewählt ist, bezogen auf das Gesamtgewicht von Komponente (A2) im Reaktionsgemisch ($R_G$), umfasst.

4. **4.** Verfahren nach einem der Ansprüche 1 bis 3, wobei Komponente (B) nicht weniger als 80 Gew.-% 4,4'-Dihydroxybiphenyl, bezogen auf das Gesamtgewicht von Komponente (B) im Reaktionsgemisch ($R_G$), umfasst.

5. **5.** Verfahren nach einem der Ansprüche 1 bis 4, wobei Komponente (C) nicht weniger als 50 Gew.-% Kaliumcarbonat, bezogen auf das Gesamtgewicht von Komponente (C) im Reaktionsgemisch ($R_G$), umfasst.

6. **6.** Verfahren nach einem der Ansprüche 1 bis 5, wobei Komponente (D) nicht weniger als 50 Gew.-% mindestens eines Lösungsmittels, das aus der Gruppe bestehend aus N-Methylpyrrolidon, N-Dimethylacetamid, Dimethylsulfoxid und Dimethylformamid ausgewählt ist, bezogen auf das Gesamtgewicht von Komponente (D) im Reaktionsgemisch ($R_G$), umfasst.

7. **7.** Verfahren nach einem der Ansprüche 1 bis 6, wobei Komponente (A) 20 bis 70 Mol-% Komponente (A1) und 30 bis 80 Mol-% Komponente (A1), bezogen auf die gesamte molare Menge von Komponente (A) im Reaktionsgemisch ($R_G$), umfasst.

8. **8.** Verfahren nach einem der Ansprüche 1 bis 7, wobei Schritt iii) die folgenden Schritte umfasst:

   iii-1) Gießen der in Schritt ii) bereitgestellten Lösung (S) unter Erhalt eines Films der Lösung (S),
   iii-2) Abdampfen des mindestens einen aprotischen polaren Lösungsmittels aus dem in Schritt iii-1) erhaltenen Film der Lösung (S) unter Erhalt der Membran (M), die in Form eines Films vorliegt.

9. Verfahren nach einem der Ansprüche 1 bis 8, wobei das Abtrennen des mindestens einen aprotischen polaren Lösungsmittels aus der Lösung (S) in Schritt iii) durch ein Phaseninversionsverfahren durchgeführt wird.

10. Membran (M), erhalten durch das Verfahren nach einem der Ansprüche 1 bis 9.

11. Membran (M) nach Anspruch 10, umfassend mindestens eine Katalysatorbeschichtung.

12. Katalysatorbeschichtete Membran, umfassend eine Membran (M) nach Anspruch 10 oder 11, wobei die Katalysatorschichten für Anode und Kathode auf beiden Seiten der Membran (M) mit einer ein Bindemittel umfassenden Katalysatordispersion aufgetragen sind, wobei das Bindemittel aus der Gruppe bestehend aus Nafion und Polymeren vom Nafion-Typ (PFSA), sulfonierten Polyarylensulfonpolymeren (sP) und sulfonierten Styrolcopolymeren ausgewählt ist.

13. Katalysatorbeschichtete Membran nach Anspruch 12, wobei das Bindemittel in der Katalysatordispersion und die Membran (M) die gleichen sulfonierten Polyarylensulfonpolymere (sP) umfassen.

14. Brennstoffzelle, umfassend eine Membran (M) nach Anspruch 10 oder 11.

15. Elektrolyse- oder Elektrodialysezelle, umfassend eine Membran (M) nach Anspruch 10 oder 11.

16. Verwendung der Membran (M) nach Anspruch 10 oder 11 in einer Elektrolysezelle, einer Elektrodialysezelle oder einer Brennstoffzelle.

17. Verfahren zur Erzeugung von elektrischer Energie und/oder Wasserstoff unter Verwendung der Membran (M) nach Anspruch 10 oder 11.

## Revendications

1. Procédé de préparation d'une membrane (M) contenant un polymère de polyarylènesulfone sulfoné (sP) comprenant les étapes

   i) conversion d'un mélange réactionnel ($R_G$) comprenant un composant dihalogénosulfone aromatique (composant (A)) comprenant

      au moins une dihalogénosulfone aromatique sulfonée (composant (A1)), et au moins une dihalogénosulfone aromatique non sulfonée (composant (A2)),
      au moins un composé dihydroxy aromatique (composant (B)), au moins de composé carbonate (composant (C)), et
      au moins un solvant polaire aprotique (composant (D)),
      pour obtenir un mélange de produits ($P_G$) comprenant un polymère de polyarylènesulfone sulfoné (sP), l'au moins un solvant polaire aprotique et au moins un composé halogénure inorganique,

   ii) séparation de l'au moins un halogénure inorganique du mélange de produits ($P_G$) pour obtenir une solution (S) comprenant le polymère de polyarylènesulfone sulfoné (sP) et l'au moins un solvant polaire aprotique,
   iii) séparation de l'au moins un solvant polaire aprotique de la solution (S) pour obtenir la membrane (M) contenant le polymère de polyarylènesulfone sulfoné (SP), dans lequel le polymère de polyarylènesulfone sulfoné (sP) dans la solution (S) dans l'étape ii) reste sous forme dissoute avant que l'étape iii) ne soit conduite.

2. Procédé selon la revendication 1, dans lequel le composant (A1) comprend au moins un composé choisi dans le groupe constitué par l'acide 4,4'-dichlorodiphénylsulfone-3,3'-disulfonique, le sel disodique de l'acide 4,4'-dichlorodiphénylsulfone-3,3'-disulfonique, le sel dipotassique de l'acide 4,4'-dichlorodiphénylsulfone-3,3'-disulfonique, l'acide 4,4'-difluorodiphénylsulfone-3,3'-disulfonique, le sel disodique de l'acide 4,4'-difluorodiphénylsulfone-3,3'-disulfonique et le sel dipotassique de l'acide 4,4'-difluorodiphénylsulfone-3,3'-disulfonique.

3. Procédé selon la revendication 1 ou 2, dans lequel le composant (A2) ne comprend pas moins de 80 % en poids d'au moins une dihalogénosulfone aromatique choisie dans le groupe constitué par la 4,4'-dichlorodiphénylsulfone et la 4,4'-difluorodiphénylsulfone, par rapport au poids total du composant (A2) dans le mélange réactionnel ($R_G$).

4. Procédé selon l'une quelconque des revendications 1 à 3, dans lequel le composant (B) ne comprend pas moins de 80 % en poids de 4,4'-dihydroxybiphényle, par rapport au poids total du composant (B) dans le mélange réactionnel ($R_G$).

5. Procédé selon l'une quelconque des revendications 1 à 4, dans lequel le composant (C) ne comprend pas moins de 50 % en poids de carbonate de potassium par rapport au poids total du composant (C) dans le mélange réactionnel ($R_G$).

6. Procédé selon l'une quelconque des revendications 1 à 5, dans lequel le composant (D) ne comprend pas moins de 50 % en poids d'au moins un solvant choisi dans le groupe constitué par la N-méthylpyrrolidone, le N-diméthylacétamide, le diméthylsulfoxyde et le diméthylformamide, par rapport au poids total du composant (D) dans le mélange réactionnel ($R_G$).

7. Procédé selon l'une quelconque des revendications 1 à 6, dans lequel le composant (A) comprend 20 à 70 % en moles du composant (A1) et 30 à 80 % en moles du composant (A1) par rapport à la quantité molaire totale du composant (A) dans le mélange réactionnel ($R_G$).

8. Procédé selon l'une quelconque des revendications 1 à 7, dans lequel l'étape iii) comprend les étapes suivantes

iii-1) coulée de la solution (S) fournie dans l'étape ii) pour obtenir un film de la solution (S),
iii-2) évaporation de l'au moins un solvant polaire aprotique à partir du film de la solution (S) obtenue à l'étape iii-1) pour obtenir la membrane (M) qui est sous la forme d'un film.

9. Procédé selon l'une quelconque des revendications 1 à 8, dans lequel la séparation de l'au moins un solvant polaire aprotique de la solution (S) dans l'étape iii) est effectuée par un procédé d'inversion de phases.

10. Membrane (M) obtenue par le procédé selon l'une quelconque des revendications 1 à 9.

11. Membrane (M) selon la revendication 10 comprenant au moins un revêtement de catalyseur.

12. Membrane revêtue de catalyseur comprenant une membrane (M) selon la revendication 10 ou 11, dans laquelle les couches de catalyseur pour anode et cathode sont revêtues sur les deux côtés de la membrane (M) par une dispersion de catalyseur comprenant un liant,
dans laquelle le liant est choisi dans le groupe constitué par le Nafion et les polymères de type Nafion (PFSA), les polymères de polyarylènesulfone sulfonés (sP) et les copolymères de styrène sulfonés.

13. Membrane revêtue de catalyseur selon la revendication 12, dans laquelle le liant dans la dispersion de catalyseur et la membrane (M) comprennent les mêmes polymères de polyarylènesulfone sulfonés (sP).

14. Pile à combustible comprenant une membrane (M) selon la revendication 10 ou 11.

15. Cellule d'électrolyse ou d'électrodialyse comprenant une membrane (M) selon la revendication 10 ou 11.

16. Utilisation de la membrane (M) selon la revendication 10 ou 11 dans une cellule électrolytique, une cellule d'électrodialyse ou une pile à combustible.

17. Procédé pour la préparation d'énergie électrique et/ou d'hydrogène à l'aide de la membrane (M) selon la revendication 10 ou 11.

Figure 1

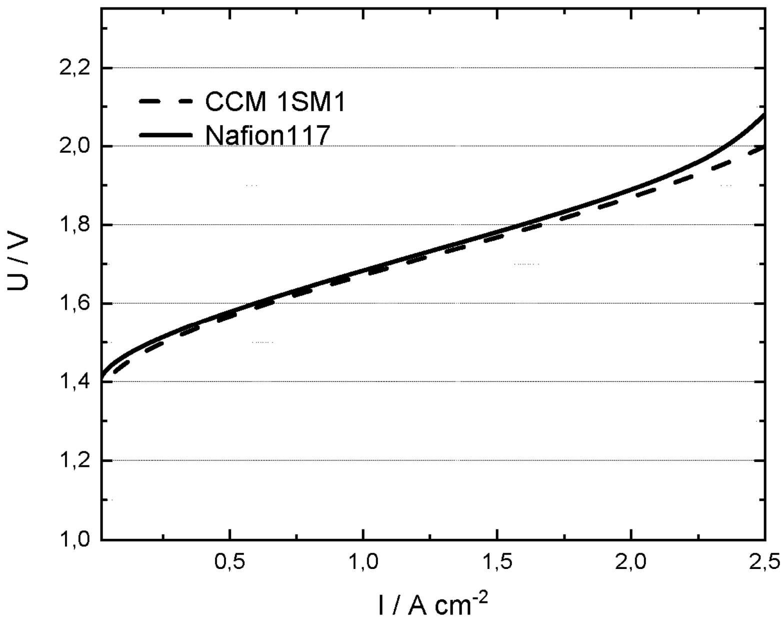

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 297363 A
- EP 135130 A
- WO 2017148850 A
- WO 2019016082 A


### Non-patent literature cited in the description


- **E.M. KOCH** ; **H.-M. WALTER**. *Kunststoffe*, 1990, vol. 80, 1146
- **E. DÖRING**. *Kunststoffe*, 1990, vol. 80, 1149
- **N. INCHAURONDO-NEHM**. *Kunststoffe*, 2008, vol. 98, 190
- **R.N. JOHNSON**. *J. Polym. Sci.*, 1967, vol. A-1 (5), 2375
- **J.E. MCGRATH**. *Polymer*, 1984, vol. 25, 1827
- Polymer Stabilisation. **P. GIJSMAN**. Handbook of Environmental Degradation of materials. 2018